(19) **Europäisches Patentamt European Patent Office Office européen des brevets**

(11) **EP 1 742 373 B1**

(12) **FASCICULE DE BREVET EUROPEEN**

(45) Date de publication et mention de la délivrance du brevet:
**30.07.2008 Bulletin 2008/31**

(51) Int Cl.:
**H04B 1/04** (2006.01)

(21) Numéro de dépôt: **06013539.9**

(22) Date de dépôt: **30.06.2006**

(54) **Capteur-émetteur domotique autonome et procédé pour son fonctionnement**

Autarker Haushaltssensorsender und Verfahren zum Betrieb desselben

Autonomous domestic sensor-transmitter and its method of operation

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.07.2005 FR 0507139**

(43) Date de publication de la demande:
**10.01.2007 Bulletin 2007/02**

(73) Titulaire: **Somfy SAS**
**74300 Cluses (FR)**

(72) Inventeurs:
• **Thomas, Dieter**
**78112 Sankt-Georgen (DE)**
• **Neumann, Alexander**
**72072 Tübingen (DE)**
• **Grehant, Bernard**
**74300 Nancy-sur-Cluses (FR)**

(74) Mandataire: **Bugnion Genève**
**Bugnion S.A.**
**Conseils en Propriété Industrielle**
**Case Postale 375**
**1211 Genève 12 (CH)**

(56) Documents cités:
**WO-A-20/04105211          GB-A- 2 309 360**
**US-A1- 2003 143 963**

**Description**

L'invention concerne un capteur-émetteur autonome défini selon le préambule de la revendication 1. Il concerne aussi un procédé de fonctionnement d'un tel capteur-émetteur.

Un capteur-émetteur connu de l'art antérieur comprend un moyen d'alimentation autonome par conversion d'une énergie fournie par une source en énergie électrique. La source d'énergie peut être notamment de type électromagnétique (rayonnement solaire) ou de type mécanique (rotation ou vibration d'une structure sous l'effet du vent ou de la pluie). Cette énergie électrique est ensuite stockée dans un moyen de stockage en général physico-chimique comme une batterie d'accumulateurs, ou préférentiellement un supercondensateur, ou un simple condensateur.

Un capteur-émetteur comprend un moyen d'émission de signaux de communication sans fil par ondes électromagnétiques, par exemple par ondes radioélectriques. Ce moyen d'émission permet au capteur de communiquer des informations à différents autres dispositifs d'un réseau domotique tels que notamment des actionneurs, des unités de commande et d'autres capteurs. Le capteur-émetteur peut éventuellement comprendre des moyens de réception de signaux de communication de manière à réaliser une communication bidirectionnelle entre le capteur-émetteur et certains autres dispositifs du réseau. Un tel capteur-émetteur est par exemple décrit dans la demande EP 0 771 929 ou dans les demandesEP 1 314 849et US 2003/0143963.

Un problème posé avec ce type de capteur-émetteur est celui de l'installation et de la première mise en oeuvre sur site.

Il convient en effet de pouvoir procéder à des essais de communication et de bon fonctionnement immédiatement après la pose du capteur-émetteur. Or, les moyens de conversion d'énergie et de stockage sont généralement dimensionnés en fonction des contraintes normales d'utilisation. Si par exemple le capteur-émetteur est alimenté par un panneau photo-voltaïque, le moyen de stockage doit être adapté à une autonomie de longue durée, de manière à permettre un bon fonctionnement même après une longue période de non ensoleillement (par exemple une nuit suivie d'une matinée avec fort brouillard). Typiquement, une période d'autonomie complète de 18 heures est requise pour une telle application. Cette autonomie ne pose aucun problème quand le moyen d'accumulation est une batterie d'accumulateur, cependant, celle-ci présente une durée de vie limitée par rapport aux condensateurs. Par ailleurs, après une longue période de stockage en magasin avant installation, la batterie d'accumulateur est déchargée et la recharge est nécessairement de longue durée, par exemple plusieurs dizaines de minutes voire plusieurs heures. Il en est de même pour un supercondensateur de capacité suffisante pour présenter l'autonomie de fonctionnement requise.

Ce problème et diverses solutions sont décrites dans la demande de brevet WO 2004/105211. On connaît ainsi de cette demande un capteur-émetteur présentant des moyens pour permettre une première charge rapide du moyen de stockage, à l'aide d'une source d'énergie supplémentaire, telle qu'une pile sèche ou une batterie automobile (par le biais d'une prise d'allume-cigare).

Une telle solution résout le problème mais nécessite de prévoir un accès à cette source supplémentaire. On pourrait, pour éviter cet inconvénient, prévoir que la source supplémentaire soit intégrée dans le capteur-émetteur (et consiste, par exemple en une pile sèche destinée uniquement à cette première charge au moment de l'installation) mais il en résulterait un surcoût.

Le but de l'invention est de fournir un capteur-émetteur permettant de résoudre les inconvénients et d'améliorer les capteurs-émetteurs autonomes connus de l'art antérieur. Le capteur-émetteur selon l'invention peut en particulier émettre quelques signaux de communication peu de temps après son installation, permettant par exemple de procéder à des essais de communication et de bon fonctionnement. L'invention concerne également un procédé de fonctionnement d'un tel capteur-émetteur.

Le capteur-émetteur selon l'invention est caractérisé par la partie caractérisante de la revendication 1.

Différents modes de réalisation du capteur-émetteur selon l'invention sont définis par les revendications dépendantes 2 à 6.

Le procédé de fonctionnement d'un capteur-émetteur autonome selon l'invention est caractérisé par la partie caractérisante de la revendication 7.

Différents modes d'exécution du procédé de fonctionnement selon l'invention sont définis par les revendications dépendantes 8 à 12.

Le dessin annexé représente, à titre d'exemple, un mode de réalisation d'un capteur-émetteur selon l'invention et un mode d'exécution du procédé de fonctionnement d'un tel capteur-émetteur.

La figure 1 est un schéma électrique d'un mode de réalisation d'un capteur-émetteur selon l'invention.

La figure 2 est un ordinogramme d'un mode d'exécution d'un procédé de fonctionnement d'un capteur-émetteur selon l'invention.

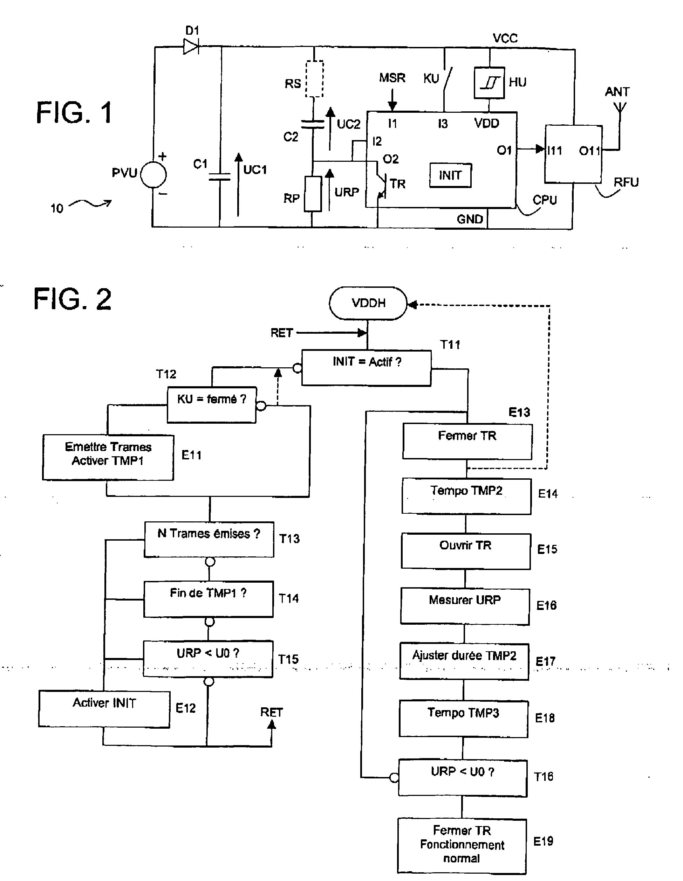

Le capteur-émetteur 10 représenté à la figure 1 comprend une unité photovoltaïque PVU de faibles dimensions constituée par exemple par un panneau de photopiles silicium et alimentant le reste du circuit. Le capteur-émetteur comprend en outre principalement une unité logique de traitement CPU, un moyen RFU d'émission de signaux radioélectriques, un moyen de stockage d'énergie électrique constitué par un premier condensateur C1 et un deuxième condensateur C2, les condensateurs présentant des capacités très différentes, ce qui leur confère des capacités de stockage très différentes. Sous un éclairement de 11 klux, l'unité photovoltaïque PVU est par exemple capable de fournir un courant de 6,5 mA sous une tension de 1,15 V.

Quatre branches électriques parallèles peuvent être identifiées entre les bornes du premier condensateur C1 constituant d'une part la masse du circuit et d'autre part un potentiel VCC. La première branche comprend un branchement série de l'unité photovoltaïque PVU et d'une diode D1. La deuxième branche comprend un branchement série du deuxième condensateur C2 et d'un interrupteur commandé TR le reliant à la masse, une résistance RP de très forte valeur étant disposée en parallèle de l'interrupteur. L'interrupteur TR est commandé par l'unité logique de traitement. Préférentiellement, cet interrupteur commandé TR est lui-même intégré à l'unité logique de traitement, comme représenté sur la figure 1. En effet, une sortie logique 02 de l'unité logique de traitement, de type collecteur ouvert, peut être connectée à une électrode du deuxième condensateur C2 de manière à ce que lorsque l'interrupteur commandé TR est fermé, un courant électrique de charge circule dans le condensateur C2.

La troisième branche comprend une unité hystérésis HU et l'unité logique de traitement CPU reliée entre ses bornes d'alimentation VDD et GND. La quatrième branche comprend le moyen RFU d'émission des signaux radioélectriques.

Une première sortie O1 de l'unité logique de traitement est raccordée à une entrée I11 du moyen RFU d'émission de signaux radioélectriques, dont la sortie O11 est raccordée à une antenne ANT.

Le premier condensateur C1 est chargé par l'unité photovoltaïque PVU à travers la diode D1. Cette diode évite la décharge du condensateur C1 quand, par suite d'une baisse d'ensoleillement, la tension de l'unité photovoltaïque devient inférieure à celle du premier condensateur. Si l'unité photovoltaïque est intrinsèquement irréversible, la diode D1 est inutile. Le premier condensateur C1 présente une capacité limitée, par exemple égale au dixième de la capacité nominale requise par le capteur-émetteur autonome. Elle peut être encore inférieure ou très inférieure à cette valeur.

L'autonomie nominale du capteur-émetteur est assurée par le deuxième condensateur C2 qui consiste par exemple en un supercondensateur.

Un dispositif élévateur de tension peut être intercalé dans le circuit, par exemple au niveau de la diode D1, si la tension nominale du panneau photovoltaïque est inférieure à la tension nominale d'alimentation des circuits électroniques.

L'unité logique de traitement CPU est par exemple un microcontrôleur dont la borne d'alimentation positive VDD est reliée au potentiel VCC. Le fonctionnement du microcontrôleur est tel qu'il ne commence à fonctionner que si sa tension d'alimentation est supérieure à un premier seuil VDDH, tandis qu'il cesse de fonctionner si cette tension d'alimentation devient inférieure à un deuxième seuil VDDL, inférieur à VDDH. La différence entre ces deux valeurs de seuil constitue l'hystérésis VH de la tension d'alimentation. Selon le procédé de fonctionnement du capteur-émetteur décrit plus bas, il peut être utile d'avoir une valeur d'hystérésis importante, par exemple de l'ordre de 1 volt. Si le microcontrôleur utilisé présente intrinsèquement une faible valeur d'hystérésis VH, celle-ci est augmentée en intercalant une unité d'hystérésis HU entre le potentiel VCC et la borne d'alimentation VDD. L'unité HU contient avantageusement une diode dont le sens de conduction va du potentiel VCC à la borne VDD.

Une entrée analogique 12 de l'unité logique de traitement est raccordée à l'électrode du deuxième condensateur C2 reliée à l'interrupteur TR. Une entrée analogique I1 est raccordée à un capteur délivrant un signal de mesure MSR. Le capteur peut être un capteur de choc, de fumée, de gaz, de température, de vitesse, d'humidité ou d'ensoleillement. Dans ce dernier cas, la tension aux bornes de l'unité photovoltaïque peut servir également de signal de mesure MSR.

Une entrée logique 13 de l'unité de traitement est raccordée au potentiel VCC par un interrupteur KU, par exemple un bouton poussoir actionnable par l'installateur. Ce bouton poussoir sert notamment à activer une commande de programmation, par exemple pour l'appairage du capteur-émetteur avec d'autres dispositifs d'une installation.

Un premier mode d'exécution du procédé de fonctionnement du capteur-émetteur est décrit en référence à la figure 2.

On suppose que l'interrupteur commandé TR est initialement ouvert et que le panneau photovoltaïque est éclairé. Dans ces conditions, le condensateur C1 se charge. Un événement initiateur noté VDDH consiste en un franchissement à la hausse d'un seuil de tension par la tension VCC, cette tension devenant suffisante pour alimenter l'unité logique de traitement. Cet événement conditionne le passage à une première étape de test T11 portant sur l'état d'un indicateur d'initialisation INIT. Cet indicateur est lu dans une partie sauvegardée (type EEPROM) de la mémoire interne de l'unité logique de traitement CPU.

Si l'indicateur d'initialisation INIT n'est pas à l'état actif, alors on passe dans une procédure de programmation (à gauche de la figure 2) débutant par une étape de test T12. Si l'indicateur d'initialisation est à l'état actif, alors on passe dans une procédure opérationnelle transitoire (à droite sur la figure 2) débutant par une étape E13.

La procédure de programmation permet de régler et d'appairer le capteur-émetteur avec les autres dispositifs de l'installation avec lesquels il est destiné à communiquer. La procédure opérationnelle transitoire permet la gestion de l'alimentation électrique de l'unité logique de traitement et des moyens d'émissions de signaux après que le capteur-émetteur a été réglé et appairé et avant que le condensateur C2 soit connecté de manière permanente aux bornes du condensateur C1.

L'étape de test T12 porte sur l'état de l'interrupteur KU. Si l'interrupteur KU n'est pas fermé, alors on passe directement à une étape de test T13. Si l'interrupteur KU est fermé, alors on passe à une étape E11 dans laquelle des trames de signaux sont émises par les moyens d'émission. Ces trames contiennent par exemple un identifiant ID du capteur-émetteur et un ordre d'appairage, de manière à ce que cet identifiant ID soit appris par les autres dispositifs de l'installation. Il peut être prévu que plusieurs trames soient émises pour assurer la bonne insertion du capteur-émetteur dans l'installation. Les trames peuvent aussi contenir des informations ou des résultats d'acquisitions concernant des mesures réalisées par le capteur et permettant de s'assurer du bon fonctionnement du capteur. La première étape E11 peut aussi comporter un programme d'autotest du capteur. Cette étape comporte l'activation d'une temporisation TMP1. La fin de cette étape provoque le passage à l'étape de test T13 dans laquelle est déterminée le nombre de trames émises. Si ce nombre est supérieur à un nombre prédéterminé N, alors on passe à une étape E12 dans laquelle l'indicateur d'initialisation INIT est activé, par exemple par écriture d'une valeur particulière à un endroit déterminé dans la mémoire EEPROM de l'unité logique de traitement. Si le nombre est inférieur ou égal à N, alors on passe à une étape de test T14 dans laquelle on test si la temporisation TMP1 est échue. Si tel est le cas, on passe à l'étape E12. Dans le cas contraire, on passe à une étape de test T15 dans laquelle la tension URP est mesurée à l'aide de l'entrée analogique I2 de l'unité logique de traitement et comparée à un seuil de tension U0. Dans le cas où la tension URP est inférieure à ce seuil, on passe à l'étape E12, sinon on boucle sur l'étape de test T11 (étiquette RET). De même, à la fin de l'étape E12, on boucle sur l'étape de test T11.

Dans le cas où le capteur-émetteur est équipé de moyens de communication bidirectionnels, il est à noter que l'étape de test T13 peut être remplacée par une étape de réception d'un signal d'accusé de réception provenant d'un dispositif de l'installation.

En définitive, cette procédure de programmation permet l'émission de trames d'apprentissage et/ou de réglage en utilisant la réserve d'énergie constituée dans le premier condensateur C1. L'activation de l'indicateur d'initialisation confirme que la programmation a été réalisée et qu'on peut sortir de ce mode, soit parce que le fonctionnement a été assuré pendant une durée TMP1 prédéterminée, soit parce que le deuxième condensateur a pu se charger suffisamment à travers la résistance RP, ce qui a pour effet de rendre la tension URP inférieure au seuil U0.

Il est possible de réaliser différentes variantes de la procédure de programmation:

- dans une première variante, une seule des étapes de test T13 à T15 est réalisée,
- dans une deuxième variante, deux des étapes de test décrites doivent donner un résultat positif pour passer à l'étape E12,

- dans une troisième variante, les trois étapes de test doivent donner un résultat positif pour passer à l'étape E12,
- dans une quatrième variante, on boucle sur le deuxième test T12 tant que l'interrupteur KU n'est pas fermé, comme représenté par une flèche en trait pointillé,
- dans une cinquième variante, le test de l'état de l'interrupteur KU est remplacé par un test de réception d'un signal. Cette variante s'applique au cas où les moyens d'émissions de signaux sont de type bidirectionnel. Dans ce cas, le signal de programmation peut être envoyé par un dispositif appartenant déjà à l'installation.

Tout en étant de valeur la plus faible possible, la capacité du condensateur C1 est prévue suffisante pour permettre l'émission des trames d'apprentissage et/ou de réglage. La capacité du condensateur C1 vaut par exemple 1 F. Cependant, si par suite de fausses manipulations sur les autres dispositifs de l'installation cet apprentissage n'a pu être mené à bien, il suffit d'attendre que le condensateur C1 soit rechargé pour recommencer. La procédure de programmation est modifiable pour être parcouru plusieurs fois en ne répétant pas certaines étapes (par exemple l'étape d'autotest ou des étapes d'émission de trames) qui avaient déjà été réalisées précédemment. La capacité du condensateur C2 vaut par exemple 4 F. Des signaux de transmission étant émis tous les 15 minutes et la consommation de chacun de ces signaux valant au maximum 145 mJ, le capteur-émetteur dispose d'une autonomie de 24 heures.

Une fois l'indicateur INIT activé, la procédure opérationnelle transitoire est mise en oeuvre. Dans une étape E13, l'interrupteur commandé TR est fermé. Autrement dit, cet interrupteur n'est activé que lorsqu'au moins une des conditions suivantes est remplie :

- fin des opérations d'apprentissage (émission du nombre prévu de trames),
- échéance d'une temporisation TMP1 ayant permis une charge suffisante du condensateur C1, et/ou du condensateur C2 à travers la résistance RP, cette temporisation ayant par exemple une durée de quelques dizaines de minutes,
- mesure d'une faible valeur de tension URP, indiquant que le condensateur C1 s'est suffisamment chargé pour que la fermeture de l'interrupteur commandé TR soit possible.

Pour des raisons détaillées plus bas, dans l'étape E13, on peut effectuer une mesure de la tension URP juste avant la fermeture de l'interrupteur commandé TR.
Cependant, il est tout à fait possible que le deuxième condensateur C2 soit très peu chargé au moment où prend fin la procédure de programmation, voire pas chargé du tout dans le cas où la résistance RP est non implantée. Dans ces cas, au moment où l'interrupteur commandé TR est fermé, le premier condensateur C1 et la ligne d'alimentation sont court-circuités. Pour éviter ce phénomène, dans une étape E14, une temporisation TMP2 de durée très courte est lancée. A l'échéance de celle-ci, dans une étape E15, l'interrupteur commandé TR est ouvert. En choisissant une temporisation TMP2 suffisamment courte, seule une fraction de la charge du condensateur C1 est fournie au condensateur C2. Une résistance additionnelle RS de faible valeur disposée en série avec le condensateur C2 peut permettre de limiter encore cette valeur.

Dans une étape E16, la tension URP est mesurée à l'aide de la deuxième entrée analogique 12 de l'unité logique de traitement. Cette mesure est réalisée que la résistance RP soit implantée ou non. Elle permet d'accéder indirectement à la valeur de la tension UC2 aux bornes du deuxième condensateur C2. Le calcul de cette tension UC2 est réalisé : soit à partir de la connaissance de la tension UC1, si une entrée analogique supplémentaire de l'unité logique de traitement permet également la mesure de cette tension, soit de manière préférée à partir de la connaissance de la tension URP.

En effet, cette tension URP est égale à la différence (UC1 - UC2), et la variation ΔURP entre le début de la conduction de l'interrupteur commandé (mesurée à l'étape E13) et la fin de conduction (mesurée à l'étape E16) est égale à :

$$\Delta URP = \Delta UC1 - \Delta UC2$$

ΔUC1 étant la variation de la tension UC1 et ΔUC2 étant la variation de la tension UC2 (ΔURP est négatif, de même que ΔUC1, et ΔUC2 est positif. En valeurs absolues, la variation de la tension URP est la somme des deux variations aux bornes des condensateurs).

Or, on a conservation de la charge lors de la conduction de l'interrupteur commandé TR:

$$C1 \times \Delta UC1 = -C2 \times \Delta UC2$$

donc :

$$\Delta URP = -\Delta UC2 \times \left(1 + \frac{C2}{C1}\right)$$

ou

$$\Delta URP = \Delta UC1 \times \left(1 + \frac{C1}{C2}\right)$$

Il est donc possible de mesurer l'incrément de tension aux bornes du condensateur C2 à partir de la variation de tension ΔURP. La valeur initiale de UC2 étant connue (UC2 = 0), la tension UC2 peut-être déterminée après un nombre quelconque de cycles.

La durée de la temporisation TMP2 conditionne l'importance du transfert de charge réalisé entre le premier condensateur C1 et le deuxième condensateur C2. Si l'on désire ne pas interrompre le fonctionnement normal de l'unité logique de traitement, il faut que ce transfert de charge provoque une baisse de tension UC1 inférieure à l'hystérésis VH de tension d'alimentation. Il est par conséquent souhaitable de commencer le processus avec une très faible durée de temporisation TMP2 et d'augmenter celle-ci si l'on constate à l'étape E16 que l'augmentation de tension UC2 aurait pu être plus importante. Cet ajustement est réalisé dans une étape E17. La valeur optimale de durée de la temporisation TMP2 est celle qui conduit à une variation absolue ΔURP maximum de la tension URP d'une mesure à l'autre. La valeur ΔURP max est donnée par :

$$\Delta URP\,max = VH \times \left(1 + \frac{C1}{C2}\right)$$

Si on constate un écart valant ΔURP entre deux mesures lorsque la durée de la temporisation TMP2 vaut T2, alors la durée optimale T2max de cette durée vaut sensiblement :

$$T2max \approx \frac{T2 \times \Delta URP\,max}{\Delta URP}$$

On passe ensuite à une étape E18 dans laquelle se déroule une temporisation TMP3 qui permet d'ajuster le temps entre deux phases successives de charge du deuxième condensateur C2.

On passe ensuite à une étape de test T16 dans laquelle la tension URP est comparée à un seuil de tension U0 de faible valeur. Ce seuil U0 est par exemple égal ou inférieur à ΔURP max. Tant que la tension URP est supérieure à ce seuil, on boucle sur l'étape E13. En revanche, quand la tension URP est devenue inférieure à ce seuil, cela signifie que le deuxième condensateur C2 est suffisamment chargé pour que l'interrupteur commandé TR puisse être cette fois fermé de manière permanente. On passe alors à une étape E19 dans laquelle l'interrupteur commandé TR est fermé et le capteur-émetteur est maintenant en fonctionnement normal, présentant son autonomie maximale. Les émissions périodiques de signaux peuvent avoir lieu sans inconvénient dans le cadre de ce fonctionnement normal.

La procédure opérationnelle transitoire se prête à diverses variantes. Ainsi, dans une variante, l'étape E18 contient non plus une temporisation mais une mesure continue de la tension URP. En effet, le premier condensateur C1 se rechargeant progressivement à l'aide de l'unité photovoltaïque, la tension URP augmente de la même façon que la tension UC1. La durée de l'étape E18 est cette fois conditionnée par le fait que la tension URP a de nouveau augmenté d'une valeur prédéterminée.

Dans une autre variante, les étapes E14 à E18 sont supprimées, les autres étapes restant inchangées. Cette fois, rien ne limite la durée de fermeture de l'interrupteur commandé TR une fois que la procédure de programmation a été exécutée. La limitation résulte cette fois de la chute de tension au niveau du potentiel VCC par la fermeture de l'interrupteur commandé TR. Quand le deuxième condensateur C2 est encore complètement déchargé, cette chute de tension est très supérieure à l'hystérésis d'alimentation VH : la tension VDD passe en dessous du seuil VDDL et l'unité logique de traitement cesse de fonctionner, ce qui provoque l'ouverture de l'interrupteur commandé TR. La fermeture de l'interrupteur TR entraîne donc, au bout d'un certain temps, son ouverture : il existe donc un phénomène de relaxation illustré par la flèche en trait pointillé allant de la fin de l'étape E13 à l'événement initiateur symbolisé par VDDH. Le condensateur C2 se charge comme dans la première variante de manière incrémentale, mais cette fois sans que des moyens viennent spécifiquement agir sur l'interrupteur commandé pour contrôler la charge.

Cette dernière variante de procédure opérationnelle transitoire est donc très simple. Cependant la première variante décrite est préférée si l'on souhaite que le capteur-émetteur soit au moins partiellement fonctionnel pendant que dure la charge du deuxième condensateur C2. Cette variante maintient en effet une tension d'alimentation suffisante pour permettre par exemple l'émission de signaux si nécessaire pendant que se déroule l'étape E18.

Le capteur-émetteur selon l'invention et son procédé de fonctionnement permettent donc une mise en condition fonctionnelle extrêmement rapide du capteur-émetteur. La description se réfère à un capteur-émetteur dont la source d'énergie est lumineuse. Cependant, l'unité photovoltaïque PVU décrite peut être remplacer par tout transducteur susceptible de transformer une énergie non électrique en énergie électrique tel que par exemple un microgénérateur électromagnétique entraîné par un moulinet d'anémomètre ou un élément piézoélectrique convertissant en électricité les vibrations de la structure sur laquelle il est monté.

Avec le procédé décrit, le capteur-émetteur selon l'invention peut être opérationnel en 15 minutes sous un éclairement de 15 klux et en 22 minutes sous un éclairement de 11 klux.

Dans le cas où les éléments principal et auxiliaire sont des condensateurs comme décrit plus haut, on entend par capacité de stockage des éléments, leur capacité exprimée en Farad.

Les éléments principal et auxiliaire peuvent également consister en des batteries d'accumulateurs. Dans ce cas, on entend par capacité de stockage des éléments, leur charge exprimée en Ampère heure.

L'un des éléments peut consister en un condensateur et l'autre peut consister en une batterie d'accumulateurs. Dans ce cas, on entend par capacité de stockage des éléments, les énergies stockées dans ces éléments lors du fonctionnement du capteur-émetteur. Il en est de même lorsque les deux éléments sont des condensateurs et qu'ils sont chargés sous des tensions différentes.

Dans le cas où les capacités des éléments principal et auxiliaire sont sensiblement égales, l'invention reste intéressante puisqu'elle permet de diviser par deux le temps de charge.

**Revendications**

1.  Capteur-émetteur autonome (10) comprenant un moyen (PVU) de conversion d'une énergie en une énergie électrique et un moyen de stockage de l'énergie électrique (C1, C2), le moyen de stockage alimentant un moyen de détection et/ou de mesure d'une grandeur physique et un moyen (RFU) d'émission d'ondes électromagnétiques pour communiquer des informations sur cette grandeur physique à un dispositif domotique, **caractérisé en ce que** le moyen de stockage d'énergie électrique comprend un élément principal (C2) de stockage d'énergie électrique et un élément auxiliaire (C1) de stockage d'énergie électrique et **en ce que** le moyen de stockage d'énergie électrique comprend un interrupteur commandé (TR) monté en série avec l'élément principal, l'interrupteur et l'élément principal étant montés en parallèle avec l'élément auxiliaire.

2.  Capteur-émetteur selon la revendication 1, **caractérisé en ce qu'**il comprend une unité logique de traitement (CPU) commandant l'état de l'interrupteur commandé.

3.  Capteur-émetteur selon la revendication 2, **caractérisé en ce que** l'unité logique de traitement intègre l'interrupteur commandé.

4.  Capteur-émetteur selon l'une des revendications précédentes, **caractérisé en ce que** les éléments principal et auxiliaire de stockage électrique sont des condensateurs.

5.  Capteur-émetteur selon l'une des revendications précédentes, **caractérisé en ce que** la capacité de stockage de l'élément auxiliaire est inférieure à la capacité de stockage de l'élément principal.

6.  Capteur-émetteur selon la revendication précédente, **caractérisé en ce que** la capacité de stockage de l'élément principal est au moins 3 fois supérieure à celle de l'élément auxiliaire.

7. Procédé de fonctionnement d'un capteur-émetteur autonome selon l'une des revendications 1 à 6, **caractérisé en ce qu'**il comprend une procédure de programmation dans laquelle le moyen d'émission d'ondes électromagnétiques est au moins principalement alimenté par l'élément auxiliaire.

8. Procédé de fonctionnement selon la revendication 7, **caractérisé en ce qu'**il comprend une procédure de programmation dans laquelle le moyen d'émission d'ondes électromagnétiques n'est pas alimenté par l'élément principal.

9. Procédé de fonctionnement selon l'une des revendications 7 à 8, **caractérisé en ce que** la fin de la procédure de programmation est déclenchée par l'un des événements suivants:

   - un nombre prédéterminé (N) de trames envoyées durant la procédure de programmation est atteint,
   - un signal d'accusé de réception est reçu,
   - une temporisation, (TMP1) est échue,
   - la tension aux bornes de l'interrupteur commandé est inférieure à un seuil prédéterminé (U0).

10. Procédé de fonctionnement selon l'une des revendications 7 à 9, **caractérisé en ce qu'**il comprend une procédure opérationnelle transitoire dans laquelle l'élément principal est au moins partiellement chargé par l'énergie stockée dans l'élément auxiliaire à travers l'interrupteur commandé.

11. Procédé de fonctionnement selon la revendication 10, **caractérisé en ce que** les durées des phases de conduction de l'interrupteur commandé sont telles que la tension aux bornes de l'élément auxiliaire ne chute pas en dessous d'un seuil prédéterminé (VDDL).

12. Procédé de fonctionnement selon l'une des revendications 10 à 11, **caractérisé en ce que** la fin de la procédure opérationnelle transitoire est déclenchée par le franchissement à la baisse par la tension (URP) aux bornes de l'interrupteur commandé d'un seuil de tension prédéterminé (U0) et **en ce que** la procédure opérationnelle transitoire est suivie d'une procédure dans laquelle l'interrupteur commandé est fermé en permanence,

**Claims**

1. Self-powered sensor-transmitter (10) comprising a means (PVU) for converting an energy into an electrical energy and a means for storing electrical energy (C1, C2), the storing means supplying a means for detecting and/or measuring a physical quantity and a means (RFU) for transmitting electromagnetic waves to communicate information about this quantity to a home automation device, **characterized in that** the means for storing the electrical energy comprises a main element (C2) for storing electrical energy and an auxiliary element (C1) for storing electrical energy and **in that** the means for storing electrical energy stocking comprises a controlled switch (TR) being series-connected with the main element, the switch and the main element being connected in parallel with the auxiliary element.

2. Sensor-transmitter according to claim 1, **characterized in that** it comprises a logic processing unit (CPU) controlling the state of the controlled switch.

3. Sensor-transmitter according to claim 2, **characterized in that** the logic processing unit comprises the controlled switch.

4. Sensor-transmitter according to one of the preceding claims, **characterized in that** the main and auxiliary elements for electrical storing are capacitors.

5. Sensor-transmitter according to one of the preceding claims, **characterized in that** the storing capacity of the auxiliary element is lower than the storing capacity of the main element.

6. Sensor-transmitter according to the preceding claim, **characterized in that** the storing capacity of the main element is at least three times higher than the storing capacity of the auxiliary element.

7. Method for operating a self-powered sensor-transmitter according to one of claims 1 to 6, **characterized in that** it comprises a programming procedure in which the means for transmitting electromagnetic waves are at least mainly supplied by the auxiliary element.

8. Operating method according to claim 7, **characterized in that** it comprises a programming procedure in which the means for transmitting electromagnetic waves are not supplied by the main element.

9. Operating method according to one of claims 7 to 8, **characterized in that** the end of the programming procedure is triggered by one of the following events:

   a predefined number (N) of frames sent during the programming procedure is reached,
an acknowledgment signal is received,
the end of a timeout (TMP1),
the voltage at the terminals of the controlled switch is lower than a predetermined threshold (UO).

10. Operating method according to one of claims 7 to 9, **characterized in that** it comprises a transient procedure in which the main element is at least partially charged by the energy stored in the auxiliary element through the controlled switch.

11. Operating method according to claim 10, **characterized in that** the durations of the conduction phases of the controlled switch are so that the voltage at the terminals of the auxiliary element does not fall under a predefined threshold (VDDL).

12. Operating method according to one of claims 10 to 11, **characterized in that** the end of the transient procedure is triggered by the voltage (URP) at the terminals of the controlled switch falling below a predefined voltage threshold (U0) and **in that** the transient procedure is followed by a procedure in which the controlled switch is permanently closed.

**Patentansprüche**

1. Sensor-Sender-Anordnng (10) mit einem Mittel (PVU) zum Umwandeln einer Energie in eine elektrische Energie, mit einem Mittel (C1, C2) zum Speichern der elektrischen Energie, welches ein Mittel zum Erfassen und/oder Messen einer physikalischen Grösse speist, und mit einem Mittel (RFU) zum Senden elektromagnetischer Wellen, um Informationen über diese physikalische Grösse an eine domotische Vorrichtung zu überragen, **dadurch gekennzeichnet, dass** das Mittel zum Speichern elektrischer Energie ein Hauptelement (C2) zum Speichern elektrischer Energie und ein Hilfselement (C1) zum Speichern elektrischer Energie aufweist und dass das Mittel zum Speichern elektrischer Energie einen gesteuerten Schalter (TR) hat, der in Reihe mit dem Hauptelement montiert ist, wobei dieser Schalter und das Hauptelement parallel zum Hilfselement angeordnet sind.

2. Sensor-Sender-Anordnung nach Anspruch 1, **dadurch gekennzeichnet, dass** sie eine logische Verarbeitungseinheit (CPU) aufweist, die den Zustand des gesteuerten Schalters steuert.

3. Sensor-Sender-Anordnung nach Anspruch 2, **dadurch gekennzeichnet, dass** die logische Verarbeitungseinheit den gesteuerten Schalter einschliesst.

4. Sensor-Sender-Anordnung nach einem der vorhergehenden Ansprüche, **dadurch gekennzeichnet, dass** die Haupt- und Hilfselemente zum elektrischen Speichern Kondensatoren sind.

5. Sensor-Sender-Anordnung nach einem der vorhergehenden Ansprüche, **dadurch gekennzeichnet, dass** die Speicherkapazität des Hilfselements geringer ist als die des Hauptelements.

6. Sensor-Sender-Anordnung nach dem vorhergehenden Anspruch, **dadurch gekennzeichnet, dass** die Speicherkapazität des Hauptelements wenigstens dreimal grösser ist als die des Hilfselements.

7. Verfahren zum Betreiben einer autonomen Sensor-Sender-Anordnung nach einem der Ansprüche 1 bis 6, **dadurch gekennzeichnet, dass** es ein Programmierungsverfahren einschliesst, bei welchem das Mittel zum Senden elektromagnetischer Wellen wenigstens hauptsächlich vom Hilfselement gespeist wird.

8. Verfahren nach Anspruch 7, **dadurch gekennzeichnet, dass** es ein Programmierungsverfahren einschliesst, bei welchem das Mittel zum Senden elektromagnetischer Wellen nicht vom Hauptelement gespeist wird.

9. Verfahren nach Anspruch 7 oder 8, **dadurch gekennzeichnet, dass** das Ende des Programmierungsverfahrens durch eines der folgenden Ereignisse ausgelöst wird:

- Eine vorbestimmte Zahl (N) von Datenblöcken, die während des Programmierungsverfahrens übertragen werden, ist erreicht worden,
- ein Quittungssignal ist empfangen worden,
- eine Verweilzeit (TMP1) ist abgelaufen,
- die Spannung an den Klemmen des gesteuerten Schalters ist geringer als ein vorbestimmter Schwellwert (U0).

10. Verfahren nach einem der Ansprüche 7 bis 9, **dadurch gekennzeichnet, dass** es ein vorübergehendes Operationsverfahren einschliesst, bei welchem das Hauptelement wenigstens teilweise durch die im Hilfselement gespeicherte Energie über den gesteuerten Schalter geladen wird.

11. Verfahren nach Anspruch 10, **dadurch gekennzeichnet, dass** die Zeitspannen, in denen der gesteuerte Schalter leitend ist, derart sind, dass die Spannung an den Klemmen des Hilfselements nicht unter einen vorbestimmten Schwellwert (VDDL) fallen.

12. Verfahren nach einem der Anspruch 10 oder 11, **da-**

**durch gekennzeichnet, dass** das Ende des vorübergehenden Operationsverfahrens dann ausgelöst wird, wenn die Spannung (URP) an den Klemmen des gesteuerten Schalters einen vorbestimmten Schwellwert unterschreitet, und dass dem vorübergehenden Operationsverfahren ein Verfahren folgt, bei welchem der gesteuerte Schalter ständig geschlossen ist.

# FIG. 1

# FIG. 2

**RÉFÉRENCES CITÉES DANS LA DESCRIPTION**

**Documents brevets cités dans la description**

- EP 0771929 A
- EP 1314849 A
- US 20030143963 A
- WO 2004105211 A